# EUROPÄISCHE PATENTSCHRIFT

(11) **EP 1 391 026 B1**
(45) Veröffentlichungstag und Bekanntmachung des Hinweises auf die Patenterteilung: **24.12.2008**
(21) Anmeldenummer: 02730249.6
(22) Anmeldetag: 10.05.2002
(51) Int. Cl.: H02K 5/22, H02K 11/04, H01R 4/42, B62D 5/04

(54) **ELEKTROMOTOR, INSBESONDERE FÜR EIN LENKSYSTEM IN EINEM FAHRZEUG**
ELECTRIC MOTOR, IN PARTICULAR FOR A STEERING SYSTEM IN A VEHICLE
MOTEUR ELECTRIQUE, EN PARTICULIER POUR LE SYSTEME DE DIRECTION D'UN VEHICULE

(30) Priorität: 25.05.2001 DE 10125472
(43) Veröffentlichungstag der Anmeldung: 25.02.2004
(73) Patentinhaber: ZF Lenksysteme GmbH, 73527 Schwäbisch Gmünd (DE)
(72) Erfinder: SCHÜLE, Jürgen, 73525 Schwäbisch Gmünd (DE); KÜHNHÖFER, Thomas, 73540 Heubach (DE); KÖHNLE, Hans, 73575 Leinzell (DE); MARTIN, Rolf, 73563 Mögglingen (DE)
(86) Internationale Anmeldenummer: PCT/EP2002/005167
(87) Internationale Veröffentlichungsnummer: WO 2002/097950

(56) Entgegenhaltungen:
- DE-A- 19 809 421
- FR-A- 2 618 272
- FR-A- 2 750 542
- US-A- 5 514 922
- US-A- 5 861 689
- US-A- 6 132 184
- US-B1- 6 194 849

## Beschreibung

Die. Erfindung bezieht sich auf einen Elektromotor, insbesondere für ein Lenksystem in einem Fahrzeug, nach dem Oberbegriff des Anspruches 1.

Derartige Elektromotoren bestehen aus einem Stator mit einer bestrombaren Erregerwicklung in einem Statorgehäuse sowie einem im Stator rotierend gelagerten Rotor, dessen Rotorbewegung als Arbeitsbewegung ausgenutzt wird. Die Bestromung der Erregerwicklung erfolgt üblicherweise durch das Anlöten von Litzen an die Wicklungsenden, die lose aus dem Statorgehäuse herausragen und die mit Anschlußkabeln verbunden werden können. Um die für hohe Motorleistungen erforderlichen hohen Stromstärken übertragen zu können, werden für die elektrische Anbindung des Elektromotors Hochstrom-Steckverbinder eingesetzt, über die die Wicklungsenden mit einem Steuergerät des Elektromotors verbunden werden.

Die über die Steckverbinder zu übertragenden Stromstärken sind jedoch in der Regel limitiert, beispielsweise auf 80 Ampere, so dass mit dieser Verbindungstechnik keine sehr hohen Motorleistungen erzeugt werden könnten. Ein unmittelbarer Anschluss der motorleistungen an das Steuergerät ist andererseits auf Grund der verhältnisnmäßig aufwändigen Montage ebenfalls nicht möglich.

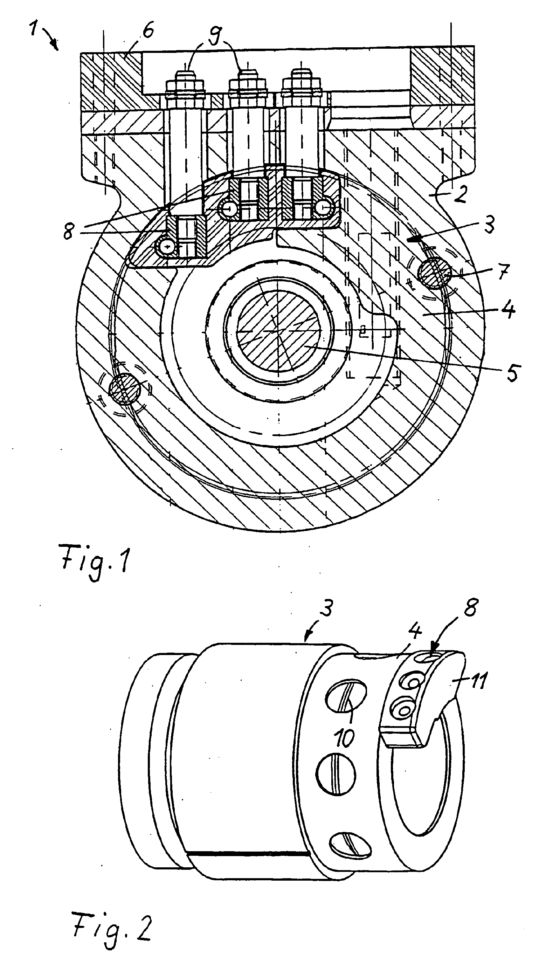

Aus der US-A-5,514,922 ist ein Elektromotor der eingangs genannten Art bekannt, bei dem der Stator eine Erregerwicklung aufweist, die über Anschlusskontakte ("conductor terminals", siehe dort "27a" in der Fig. 2) bestrombar ist, wobei die Anschlusskontakte mit dem Statorgehäuse, nämlich mit einer kranzförmigen, zylindrichen Auskragung ("annular cylindrical projection 113d") davon, verbunden sind, wobei axial von außen zugängliche, elektrische Verbindungselemente ("external conductor leads", siehe Spalte 7, Zeile 40) mit den Ansehlusskontakten ("27a") verbindbar sind. Die Fixierung der Anschlusskontakte erfolgt über eine sogenannte "isolation base 27", d.h. über einen isolierenden Sockel. Diese bekannte Konstruktion ist daher sehr aufwendig und nachteilig für die Montage des Elektromotors.

Aus der US-A-5,861,689 ist ein Elektromotor bekannt, bei dem die Anschlusskontakte "terminals 12" (siehe dort Fig. 12) in einen Anschlussstecker ("receptacle 10") integriert sind, der axial von außen zugänglich ist. Auch diese Konstruktion ist recht aufwendig zu montieren.

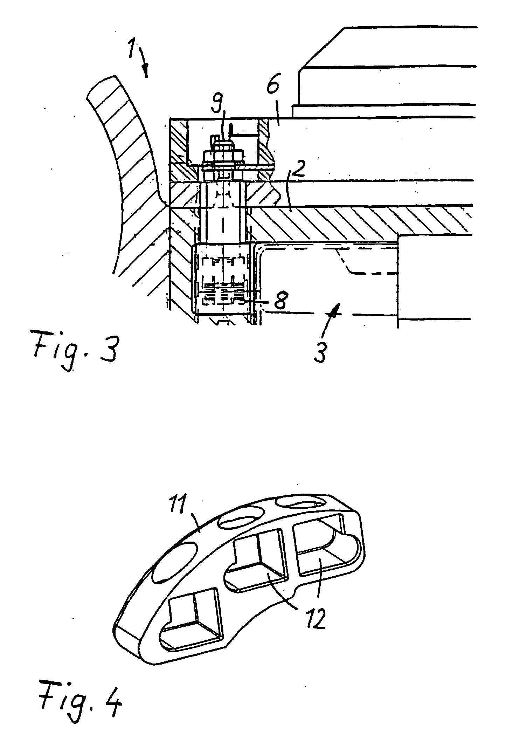

In der US-A-6,132,184 wird ein Elektromotor für die Hydraulikpumpe eines Lenkgetriebes beschrieben, bei dem Anschlusskontakte ("tubular contacts 108, 110", siehe dort Fig. 3) und bolzenförmige Verbindungselemente ("threaded fasteners 68, 92, 80, 58") vorgesehen sind, um den Elektromotor über ein Steuergerät ("control module 16") zu bestromen. Die Konstruktion der Anschlusskontakte ("tubular contacts") wie auch der Verbindungsselemente ist dort nicht genauer beschrieben.

Der Erfindung liegt das Problem zugrunde, die Erregerwicklung eines Elektromotors konstruktiv einfach in einer Weise auszubilden, die eine einfache Montage sowie eine hohe Leistungsaufnahme ermöglicht.

Dieses Problem wird erfindungsgemäß mit den Merkmalen des Anspruches 1 gelöst.

Die Anschlusskontakte, welche eine Schnittstelle zur elektrischen Verbindung nach außen darstellen, der Erregerwicklung sind fest mit dem Statorgehäuse verbunden, derart, dass radial und/oder axial von außen zugängliche, elektrisch leitende Verbindungselemente mit diesen Anschlusskontakten verbunden werden können. Die Anschlusskontakte sind in das Statorgehäuse integriert, wodurch eine feste und unlösbare Verbindung gegeben ist. Die Wicklungsenden der Erregerwicklung, die innerhalb des Statorgehäuses angeordnet ist, können von innen mit den Anschlusskontakten verbunden werden. Im Unterschied zum Stand der Technik bildern die Anschlusskontakte hierbei einen Teil des Statorgehäuses bzw. sind in dieses eingebracht, wodurch störende bewegliche Kabelenden entfallen.

Die Anschlusskontakte sind als Klemmstücke ausgeführt, an die von innen die Wicklungsenden angekrimpt werden. Von außen sind in die Klemmstücke Stehbolzen eingeführt, insbesondere eingeschraubt, die auf der dem Stator abgewandten Seite unmittelbar mit einem Steuergerät zur Steuerung der Stromversorgung des Elektromotors verbunden werden können.

Dieses Steuergerät kann mit dem Statorgehäuse bzw. mit einem Motorgehäuse verbunden werden, in welches der Stator eingesetzt ist. Däs Steuergerät sitzt zweckmäßig unmittelbar auf dem Statorgehäuse bzw. dem Motorgehäuse auf und kann fest mit diesem verbunden werden, so dass das Steuergerät und der Elektromotor eine bauliche Einheit bilden. Die Stehbolzen als Verbindungselemente zwischen Steuergerät und den Anschlusskontakten des Stators können hierbei zusätzlich die Funktion von Befestigungselementen übernehmen, über die das Steuergerät am Motor- bzw. Statorgehäuse gehalten ist.

Insbesondere für den Fall, dass die Anschlusskontakte an der axialen Stirnseite des Statorgehäuses angeordnet sind, kann eine die Anschlusskontakte überdeckende Abdeckkappe vorgesehen sein, welche die Kontakte vor Verunreinigungen schützt. Die Abdeckkappe kann Ausnehmungen aufweisen, durch die die Verbindungselemente, insbesondere die Stehbolzen, eingeführt und mit den Anschlusskontakten zu verbinden sind. Die Abdeckkappe liegt vorteilhaft in einer gemeinsamen Mantelfläche mit dem Statorgehäuse, wodurch ein axiales Einschieben des Stators in einem radialen Innenraum eines Motorgehäuses erleichtert wird.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch einen Elektromotor mit einem in einem Motorgehäuse aufgenommenen Stator sowie einem im Stator gelagerten Rotor, wobei im Bereich der axialen Stirnseite des Stators Anschlusskontakte vorgesehen sind, die über Stehbolzen mit einem oben liegenden Steuergerät verbunden sind,
- Fig. 2: eine perspektivische Ansicht des Stators mit an der axialen Stirnseite des Statorgehäuses angeordneten Anschlusskontakten,
- Fig. 3: eine Teilansicht eines Längsschnittes durch den Elektromotor mit oben liegendem Steuergerät,
- Fig. 4: eine perspektivische Ansicht einer Abdeckkappe, die axial auf die Anschlusskontakte aufzuschieben ist.

In den folgenden Figuren sind gleiche Bauteile mit gleichen Bezugszeichen versehen.

Bei dem in Fig. 1 dargestellten Elektromotor 1 handelt es sich insbesondere um einen Drehstrom-Asynchronmotor, der vorteilhaft zur Unterstützung der Lenkbewegung im Lenksystem eines Fahrzeugs eingesetzt wird. Der Elektromotor 1 umfasst in einem Motorgehäuse 2 einen Stator 3, bestehend aus einem Statorgehäuse 4 und einer im Statorgehäuse 4 angeordneten Erregerwicklung, sowie einem Rotor 5, der im Stator 3 rotierend gelagert ist und dessen Rotorbewegung als Arbeitsbewegung umgesetzt wird. Der Stator 3 ist zylindrisch ausgebildet und in einer entsprechend geformten Ausnehmung im Motorgehäuse 2 eingesetzt. Zur Fixierung des Stators 3 im Motorgehäuse 2 können axial verlaufende Befestigungselemente 7 vorgesehen sein, die insbesondere eine Drehsicherung, gegebenenfalls aber auch eine axiale Sicherung des Stators 3 im Motorgehäuse 2 bewirken.

Auf der Oberseite des Motorgehäuses 2 befindet sich ein Steuergerät 6, welches insbesondere fest mit dem Motorgehäuse 2 verbunden ist und über das die Stromversorgung und -steuerung für die Erregerwicklung im Stator 3 durchgeführt wird.

Die Verbindung zwischen der Erregerwicklung im Stator 3 und der Stromversorgung und Stromsteuerung über das Steuergerät 6 erfolgt über insgesamt drei als Klemmstücke 8 ausgeführte Anschlusskontakte, an die die Wicklungsenden der Erregerwicklung angekrimpt sind. Die Klemmstücke 8 befinden sich an der axialen Stirnseite des Statorgehäuses 4 des Stators 3 und sind insbesondere fest mit dem Statorgehäuse 4 verbunden. Die Klemmstücke 8 bestehen vorteilhaft aus Kupfer und können in das zweckmäßig aus Kunststoff bestehende Statorgehäuse 4 eingegossen sein. Jedes Klemmstück 8 weist ein Innengewinde auf, in das ein Stehbolzen 9 eingeschraubt ist, welcher die Funktion eines Verbindungselementes zur Verbindung der Erregerwicklung mit dem Steuergerät 6 hat. Dem Stehbolzen 9 kommt sowohl eine elektrisch leitende Funktion als auch eine Halte-, Klemm- und Verbindungsfunktion zur Verbindung des Steuergerätes 6 mit dem Motorgehäuse 2 zu. Die insgesamt drei Stehbolzen 9 sind im Wesentlichen radial durch das den Stator 3 umgreifende Motorgehäuse 2 hindurchgeführt und in die Klemmstücke 8 eingesetzt. Alle drei Stehbolzen 9 liegen parallel zueinander. Die Stehbolzen 9 verbinden Statorgehäuse 4, Motorgehäuse 2 und Steuergerät 6.

Fig. 2 zeigt eine perspektivische Darstellung des Stators 3 mit den stirnseitig am Statorgehäuse 4 befestigten Klemmstücken 8, die von einer Abdeckkappe 11, welche axial auf die Klemmstücke 8 aufschiebbar ist, abgedeckt sind. Die Abdeckkappe 11, welche insbesondere aus Kunststoff besteht und die Klemmstücke vor Verunreinigungen schützt sowie eine Isolierung bewirkt, weist auf die Klemmstücke 8 angepasste, radial zugängliche Ausnehmungen auf, damit die Klemmstücke 8 auch bei aufgeschobener Abdeckkappe 11 von außen radial zugänglich sind und die in Fig. 1 dargestellten Stehbolzen eingeschraubt werden können. Die radial äußere Mantelfläche der Abdeckkappe 11 deckt sich im Wesentlichen mit der radialen Mantelfläche des Statorgehäuses 4.

Fig. 2 ist weiterhin die Erregerwicklung 10 innerhalb des Statorgehäuses 4 zu entnehmen.

Wie in Fig. 3 dargestellt, befinden sich die Klemmstücke 8 an der axialen Stirnseite des Stators 3 und werden axial von dem Motorgehäuse 2 übergriffen. Die Stehbolzen 9 sind durch eine Ausnehmung im Steuergerät 6, welches auf dem Motorgehäuse 2 befestigt ist, sowie eine Ausnehmung im Motorgehäuse hindurchgeführt und in die Klemmstücke 8 eingeschraubt.

In Fig. 4 ist die Abdeckkappe 11 isoliert dargestellt. Die radial außen liegende Mantelfläche der Abdeckkappe 11 ist gekrümmt und weist einen Radius auf, der im Wesentlichen dem Radius des Statorgehäuses des Stators entspricht. In die Abdeckkappe 11 sind insgesamt drei Ausnehmungen eingebracht, in denen die Klemmstücke 8 in Einbaulage aufgenommen sind. Die Ausnehmungen 12 sind sowohl axial als auch radial zugänglich, wobei die axialen Öffnungen der Form der Klemmstücke entsprechen, damit die Abdeckkappe 11 axial auf die Klemmstücke aufgeschoben werden kann, wohingegen die radialen Öffnungen im Querschnitt rund ausgeführt sind und zur Aufnahme der Stehbolzen dienen.

### Bezugszeichenliste

- 1: Elektromotor
- 2: Motorgehäuse
- 3: Stator
- 4: Statorgehäuse
- 5: Rotor
- 6: Steuergerät
- 7: Befestigungselement
- 8: Klemmstück
- 9: Stehbolzen
- 10: Erregerwicklung
- 11: Abdeckkappe
- 12: Ausnehmung

## Patentansprüche

1. Elektromotor, insbesondere für ein Lenksystem in einem Fahrzeug, mit einem Stator (3) und einen im Stator rotierend gelagerten Rotor, wobei der Stator (3) in einem Statorgehäuse eine Erregerwicklung aufweist, die über Anschlusskontakte bestrombar ist, wobei die Anschlusskontakte mit dem Statorgehäuse (4) verbunden sind, wobei von außen zugängliche, elektrische Verbindungselemente mit den Anschlusskontakten verbindbar sind,
**dadurch gekennzeichnet,**
**dass** die Anschlusskontakte in das Statorgehäuse (4) integriert sind und einen Teil des Statorgehäuses (4) bilden, indem die Anschlusskontakte als Klemmstücke (8) ausgeführt sind, die in das Statorgehäuse (4) eingegossen sind, und dass als Verbindungselemente in die Klemmstücke (8) einführbare Stehbolzen (9) vorgesehen sind.

2. Elektromotor nach Anspruch 1,
**dadurch gekennzeichnet,**
**dass** die Anschlusskontakte an der axialen Stirnseite des Statorgehäuses (4) angeordnet und radial von außen zugänglich sind.

3. Elektromotor nach Anspruch 1 oder 2,
**dadurch gekennzeichnet,**
**dass** der Stator (3) in ein Motorgehäuse (2) einsetzbar ist, wobei die Anschlusskontakte durch radiale Öffnungen im Motorgehäuse (2) von außen zugänglich sind.

4. Elektromotor nach einem der Ansprüche 1 bis 3,
**dadurch gekennzeichnet, dass** die mit den Anschlusskontakten zu verbindenden Verbindungselemente auf der den Anschlusskontakten abgewandten Seite in ein Steuergerät (6) einragen, welches mit dem Statorgehäuse (4) verbunden ist.

5. Elektromotor nach einem der Ansprüche 1 bis 4,
**dadurch gekennzeichnet, dass** eine die Anschlusskontakte überdeckende Abdeckkappe (11) vorgesehen ist.

6. Elektromotor nach einem der Ansprüche 1 bis 5,
**dadurch gekennzeichnet, dass** der Elektromotor ein Drehstrom-Asynchronmotor ist.

## Claims

1. Electric motor, in particular for a steering system in a vehicle, having a stator (3) and a rotor which is rotatably mounted in the stator, the stator (3) having an exciter winding which can be energized via connecting contacts, in a stator housing, the connecting contacts being connected to the stator housing (4), it being possible for electrical connection elements which are accessible from the outside in the directions to be connected to the connecting contacts, **characterized in that** the connecting contacts are integrated into the stator housing (4) and form part of the stator housing (4) **in that** the connecting contacts are embodied as clamping elements (8) which are cast into the stator housing (4), and **in that** stud bolts (9) which can be inserted as connection elements into the clamping elements (8) are provided.

2. Electric motor according to Claim 1, **characterized in that** the connecting contacts are arranged on the axial end side of the stator housing (4) and are radially accessible from the outside.

3. Electric motor according to Claim 1 or 2, **characterized in that** the stator (3) can be inserted into a motor housing (2), the connecting contacts being accessible from the outside through radial openings in the motor housing (2).

4. Electric motor according to one of Claims 1 to 3, **characterized in that** the connection elements which are to be connected to the connecting contacts project, on the side facing away from the connecting contacts, into a control device (6) which is connected to the stator housing (4).

5. Electric motor according to one of Claims 1 to 4, **characterized in that** a cover cap (11) which covers the connecting contacts is provided.

6. Electric motor according to one of Claims 1 to 5, **characterized in that** the electric motor is a three-phase asynchronous motor.

## Revendications

1. Moteur électrique, en particulier pour le système de direction d'un véhicule, comprenant un stator (3) et un rotor monté à rotation dans le stator, le stator (3) présentant, dans un boîtier de stator, un enroulement d'excitation qui peut être alimenté en courant par le biais de contacts de raccordement, les contacts de raccordement étant connectés au boîtier du stator (4), des éléments de connexion électriques accessibles de l'extérieur pouvant être connectés aux contacts de raccordement,
**caractérisé en ce que**
les contacts de raccordement sont intégrés dans le boîtier du stator (4) et forment une partie du boîtier du stator (4), les contacts de raccordement étant réalisés sous forme de pinces (8) qui sont moulées dans le boîtier du stator (4) et **en ce que** l'on prévoit en tant qu'éléments de connexion des goujons filetés (9) pouvant être enfoncés dans les pinces (8).

2. Moteur électrique selon la revendication 1,
**caractérisé en ce que**
les contacts de raccordement sont disposés du côté frontal axial du boîtier du stator (4) et sont accessibles radialement depuis l'extérieur.

3. Moteur électrique selon la revendication 1 ou 2,
**caractérisé en ce que**
le stator (3) peut être inséré dans un boîtier de stator (4), les contacts de raccordement étant accessibles depuis l'extérieur par des ouvertures radiales dans le boîtier du moteur (2).

4. Moteur électrique selon l'une quelconque des revendications 1 à 3,
**caractérisé en ce que** les éléments de connexion à connecter aux contacts de raccordement pénètrent du côté opposé aux contacts de raccordement dans un appareil de commande (6) qui est connecté au boîtier du stator (4).

5. Moteur électrique selon l'une quelconque des revendications 1 à 4,
**caractérisé en ce que** l'on prévoit un capuchon de recouvrement (11) recouvrant les contacts de raccordement.

6. Moteur électrique selon l'une quelconque des revendications 1 à 5,
**caractérisé en ce que** le moteur électrique est un moteur asynchrone triphasé.
